# EUROPEAN PATENT SPECIFICATION

(11) **EP 1 965 631 B1**
(45) Date of publication and mention of the grant of the patent: **04.05.2011**
(21) Application number: 06829725.8
(22) Date of filing: 19.12.2006
(51) Int. Cl.: A01F 15/07

(54) **METHOD OF APPLYING STRETCH FILM WRAPPING TO AN AGRICULTURAL BALE**
VERFAHREN ZUM ANBRINGEN EINER STRETCHFOLIENUMHÜLLUNG AN EINEM LANDWIRTSCHAFTLICHEN BALLEN
PROCÉDÉ POUR APPLIQUER UN EMBALLAGE EN FILM ÉTIRABLE À UNE BALE AGRICOLE

(30) Priority: 28.12.2005 GB 0526404; 14.07.2006 GB 0613987
(43) Date of publication of application: 10.09.2008
(73) Proprietor: Kuhn-Geldrop B.V., 5667 KP Geldrop (NL)
(72) Inventor: VAN AMSTEL, Leonardus, Hendrikus, Maria, NL-5663 RW Geldrop (NL); VAN DE WALLE, Jacobus, Izaak, NL-56674 SM Nuenen (NL)
(74) Representative: Raynor, Simon Mark
(86) International application number: PCT/EP2006/012235
(87) International publication number: WO 2007/073906

(56) References cited:
- EP-A- 1 310 155
- DE-A1- 19 654 982
- US-A1- 2003 089 864
- US-A1- 2004 121 108
- US-B2- 6 928 796

## Description

This invention applies to a method of applying stretch film wrapping to an agricultural bale using a bale wrapper apparatus which comprises:
a bale-supporting table;
a dispenser reel arrangement from which stretch film wrapping can be withdrawn to form successive overlapping windings of film which cover the bale; and
means for applying relative rotation between the table and the dispenser reel arrangement during a wrapping cycle.

It is known to provide bale wrappers to wrap agricultural bales e.g. cylindrical bales or bales of rectangular cross-section, and composed of hay, straw or only partly dried crop (such as wet grass) to form silage, and such apparatus, for example, can be of the rotating turntable type, rotating satellite arm type, or can be incorporated in integrated baler/wrapper apparatus.

For example, US 2003/0089864 A1 describes a bale wrapper having a stationary wrapping table with a driveable conveyor for rotating a cylindrical bale about a horizontal axis, and a wrapping device mounted on a rotary arm that is rotatable about a vertical axis to apply wrapping material to the surface of the bale.

It is important to ensure, as far as possible, that the wrapping applied to the bale is under tension to envelope the bale, and in a substantially air and watertight manner to prevent ingress of atmospheric air and water to the bale, and egress of gases and liquids from the bale in the case particularly of a wrapped crop which is fermenting to form silage.

A typical wrapping cycle applies successive helical windings of pre-stretched film around the bale, while the later is being rotated about its longitudinal axis, and to ensure that no lateral gaps are formed between adjacent windings (either during the wrapping process or during subsequent handling and storage of the wrapped bale), it is accepted practice that the relative speeds of rotation of the bale about its axis, and the linear speed of withdrawal of film from a film dispenser reel are set such that there is a substantial lateral overlap between successive windings (typically 50%).

A further problem in wrapping bales in a satisfactory manner arises in connection with the initial coverage of the outer surface of the bale. There is often present in the outer surface of the bale outwardly projecting stalky material, which is liable to puncture the initial layers of overlapping film winding applied to the bale, and this can cause undesired leakage paths for water or gas. Furthermore, with conventional methods of applying overlapping windings of stretch film to bales, each successive layer also runs the risk of being punctured by the stalky material which has punctured the initial layer or layers and projects outwardly therefrom, forming a protruding point which is able to puncture further layers of wrapping.

The suppliers of stretchable plastics film for wrapping bales have to provide a product which can a) undergo pre-stretching prior to application to the bale without tearing or other damage; b) be applied under tension as successive helical windings around the bale also substantially without damage; c) subsequently adjust itself to the shape of the bale after wrapping is completed and without any unacceptable puncturing of the film by any spiky material present on the outer surface of the bale; and d) withstand any tearing or puncturing during subsequent handling of the wrapped bale e.g. discharge of the wrapped bale onto the ground, which may comprise remaining stubble following harvesting of the crop.

The manufacturers of bale wrapper apparatus, and the suppliers of the stretchable plastics film for wrapping bales with the apparatus, are constantly seeking to minimise consumption of film, for obvious reasons of economy, while at the same time seeking to ensure airtight wrapping of the bale, less risk of the film breaking, and to reduce the liability of the windings being punctured. It is particularly important to achieve improved airtight wrapping, as the quality of silage which is formed by fermentation within a wrapped bale can deteriorate rapidly when any gas exchange is allowed to take place with the ambient atmosphere.

Bale wrapper apparatus normally apply helical windings of pre-stretched (polyethylene) film to the outer surface of the bale, but it is frequently the case that in practice the airtightness of the wrapped product is less than perfect. The gas can be exchanged by permeation through the film or through the overlap of the successive windings. Regarding the latter, the length of the path that the gas has to travel (transverse to the application direction) and through the overlaps of the windings on, for example, a four layer pattern (75 centimetre film which reduces to 60 centimetres after pre-stretching) is a minimum of 60 centimetres and a maximum of 75 centimetres (average 67.5 centimetres) depending on how the two, 2-layer patterns are positioned over each other.

The present invention is a development of a new bale wrapping method and apparatus disclosed in our co-pending GB patent application No. 0526404.9 filed 28th December 2005, and which is the priority basis of European patent application No. 06256443.0 (publication No. 1803345).

The invention claimed in our co-pending application provides:
a bale wrapper apparatus for applying stretch film wrapping to an agricultural bale having an outer surface and a pair of opposed end faces and which comprises:
   a table for supporting the bale with its longitudinal axis extending substantially parallel to the ground, and for rotating the bale generally about this axis during a wrapping cycle;
   at least one holder arrangement for supporting a film dispenser arrangement to apply stretch film wrapping to cover the outer surface and and the end faces of the bale, said holder arrangement comprising two holders each adapted to support a respective film dispenser and arranged to allow two lengths of film to be withdrawn from the dispensers and to be applied to the bale;
   means for applying relative rotation between the table and the holder arrangement about a second axis extending substantially perpendicular to the longitudinal axis of the bale in order that successive windings of film can be applied to the bale; and
   means for adjusting the positions of the two holders relative to each other during the wrapping cycle between first and second wrapping positions to convert the apparatus from a first wrapping mode to a second and/or further wrapping mode(s):
      in which the wrapping cycle of the apparatus is programmed, or programmable, such that;
         a) initial coverage of the bale is carried out with the holders in the first wrapping position such that the two lengths of film are brought into at least partial overlapping engagement, prior to, or at the moment of application as at least partly laminated windings on the outer surface and the end faces of the bale to form an initial coverage layer on the bale and having a first wrapping profile; and
         b) the holders are thereafter adjustable to a second wrapping position in which the two lengths of film are applied to the initial coverage layer, to form an overlying coverage layer having a different wrapping profile from the first wrapping profile of the initial coverage layer.

In particular, the present invention seeks, by an improved method, to provide better airtightness of a wrapped bale, while using the same amount of stretch film and/or alternatively to reduce the amount of film utilised to maintain the airtightness at current levels available, preferably with existing bale wrapper apparatus and stretch film supplies. This can be done without reducing the puncture resistance, or even by increasing the puncture resistance.

### General State Of The Art

Normally, polyethylene film used to form helical windings applied to compressed bales is wound on dispenser reels of 500 or 750 millimetre length. Typical thickness of the film is 25 microns. Before being applied to the bale, the film is pre-stretched by about 60 to 70%. This means that the run length of film is extended to about 160 to 170% of its unstretched length. Due to the stretching of the film lengthwise, this causes consequent reduction of width of the film, and also a reduction in thickness of the film to about 17 microns.

The film strips are wound, usually helically onto the bales, and normally with a 50% overlap to the previous winding. Typically, four or six layers are applied to the surface of the bale. This results in a total thickness of overall film protection, provided by the successive windings, of about 70 to 100 microns.

Due to the permeability of the film, gas can permeate through an overall thickness of film of 70 to 100 microns. However, the thicker the overall layer, the less gas will be able to permeate through the overlying layers.

Also, due to the presence of wrinkles and unevenness of the surface of the wrapping, gas will be exchanged by migration between the overlaps of successive windings.

When the strips of film are applied to a bale, stalks of material can puncture the first and possibly the successive layer(s) of film wound onto the bale. Such punctures can create a direct gas connection between the inside and the outside of the bale (when all layers are punctured); or shortcut the gas exchange through the overlaps of the windings when puncturing only the first layer(s).

Current wrapping techniques can provide reasonably reliable wrapping of bales, but often at the cost of over-usage of film. One attempt to optimise usage of film might bye to consider using thinner films, but with the same number of overlying layers, but this would increase the amount of permeation of gas through the overall wrapping provided by the successive windings, and less puncture resistance of individual layers.

If additional windings should be applied to the bale, using thinner film than normal, the actual overall thickness of wrapping coverage could be increased to that of the order of 70 to 100 microns, and which would imply similar amount of gas permeation to existing usage of thicker films with less windings, and also give an improvement in resistance to leakage via the overlaps between successive windings. However, use of thinner film throughout would still involve an unacceptable reduction in puncture resistance of individual layers, and higher amount of potential leakage due to such punctures.

The present invention therefore seeks to provide method and apparatus for improving the airtightness of wrapped bales, and/or at least to reduce the amount of film usage without decreasing the puncture resistance of the individual layers to a lesser extent than that is available with current wrapping techniques.

According to the invention there is provided a method of applying stretch film wrapping to an agricultural bale using a bale wrapper apparatus which comprises:
a bale-supporting table;
a dispenser reel arrangement from which stretch film wrapping can be withdrawn to form successive overlapping windings of film which cover the bale; and
means for applying relative rotation between the table and the dispenser reel arrangement during a wrapping cycle;
in which:
   each winding of film comprises at least one thin longitudinally extending edge strip portion, and an adjoining thicker longitudinally extending portion;
   the thicker portion has a first side adjoining said edge strip portion, and an opposed parallel second side; and
   during at least an initial part of the wrapping cycle, each successive overlying winding laterally overlaps its underlying winding to such an extent that the respective first side of the thicker portion of each overlying winding substantially follows the path of the respective second side of the thicker portion of the underlying winding.

Therefore, each successive winding laterally offsets its thicker portion relative to the thicker portion of the underlying winding so as to give substantially complete and effectively uninterrupted coverage of the outer surface of the bale by the thicker portions of the windings.

To put it another way, when viewed from above the wrapped bale, the first side of the thicker portion of any overlying winding is located substantially immediately above the second side of the thicker portion of the underlying winding i.e. adjacent thicker portions of successive windings are located "side by side" when viewed from above the wrapped bale.

This gives optimum efficiency in usage of film, and improved puncture resistance. Further, the risk of gas leakage paths being formed between successive windings is also reduced.

Preferred aspects of the novel wrapping technique of the invention are set out in the dependent claims 2 to 20.

Preferred embodiments of the invention will now be described in detail, by way of example only, with reference to the accompanying drawings, in which:
Figure 1 is a schematic perspective illustration showing the general known concept of a bale wrapper to which the invention may be applied, and by way of background to description of the preferred embodiment;
Figure 2a is a schematic side view illustration of the withdrawal of a longitudinal strip of stretch film through a pre-stretcher unit, prior to application to wrap a bale; and
Figure 2b is a plan view corresponding to Figure 2a;

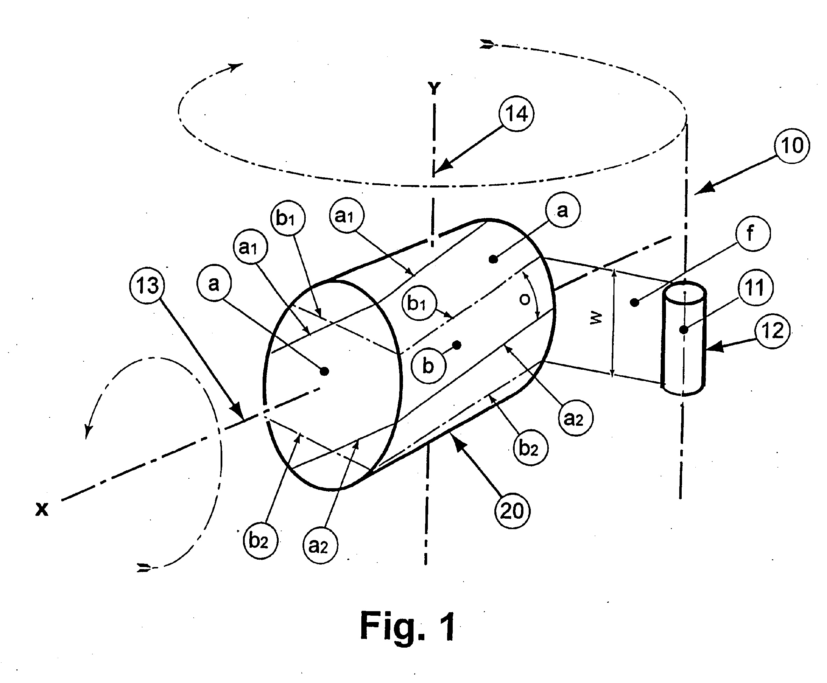

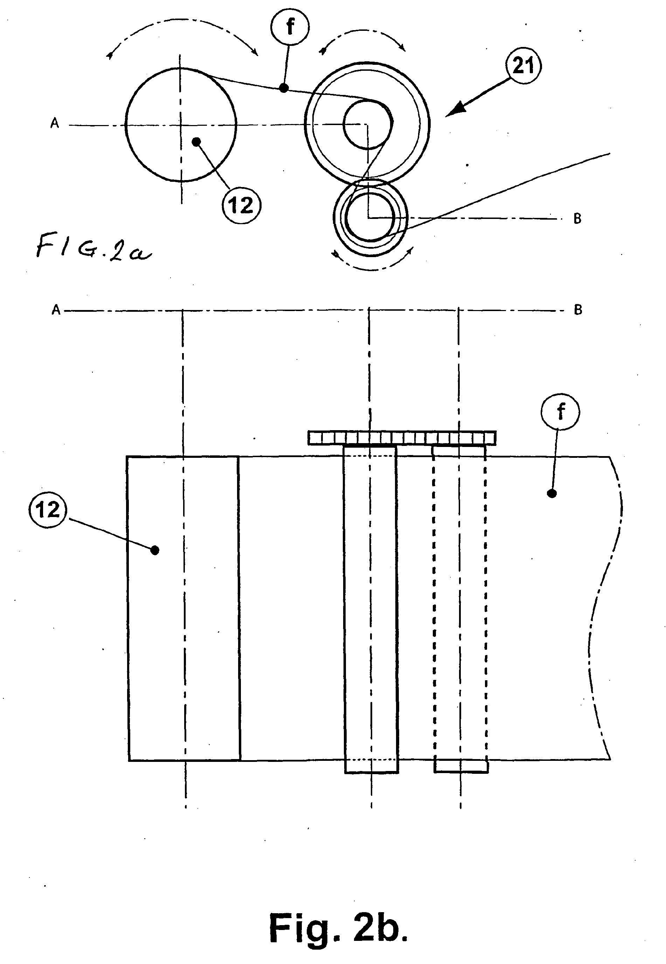

Referring first to Figures 1, 2a and 2b, the general concept of wrapping of an agricultural bale will first be described, to form background to the description of the preferred embodiment of the invention.

A bale wrapper apparatus is designated generally by reference 10, and is of the rotating satellite dispenser type. A holder 11 is mounted on one end of a rotating arm (not shown) to rotate about Y axis. A dispenser reel 12 is mounted on the holder 11, and a length of stretch film f is withdrawn from the reel 12 to form successive overlapping windings of stretch film around the cylindrical outer surface, and the opposed circular end faces of a rotating cylindrical bale 20.

A table (not shown in detail) is provided to support the agricultural bale 20 with its longitudinal axis X extending substantially parallel to the ground (when the apparatus is standing on level ground) and forming a first axis 13 about which the bale 20 is rotatable during a wrapping cycle.

During a wrapping cycle, the bale 20 rotates about first axis 13, while simultaneously film dispenser reel 12 is caused to orbit in a substantially horizontal plane about vertical axis Y, forming a second axis 14.

Figures 2a and 2b show the leading of a length of film (f) which is withdrawn from dispenser reel 12 to the outer surface of the bale, by way of a pre-stretcher unit 21. This is set so as to apply required stretching of the film (f) so that the pre-stretched film windings are applied around the outer surface of the bale.

This is one preferred form of bale wrapper apparatus to which the invention may be applied, but it should be understood that the general concept of the invention is also applicable to bale wrapper apparatus of the rotating turntable type; and also to apparatus having a rotatable ring carrying one or more film dispensers, as referred to above.

The above description with reference to Figures 1, 2 and 2a is intended to form background to description of preferred aspects of examples of wrapping methods and techniques according to the invention with reference to the further accompanying figures of drawings, in which:

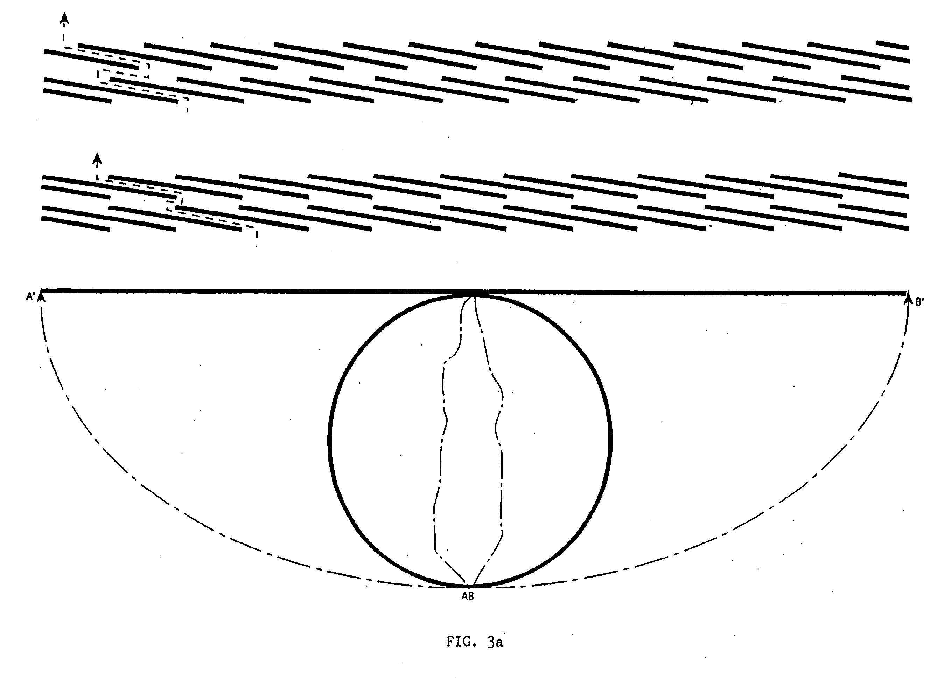

Figure 3a illustrates schematically maximum length overlap and minimum length for a 50% overlap (2 plus 2 layer pattern) achievable with existing wrapping techniques;

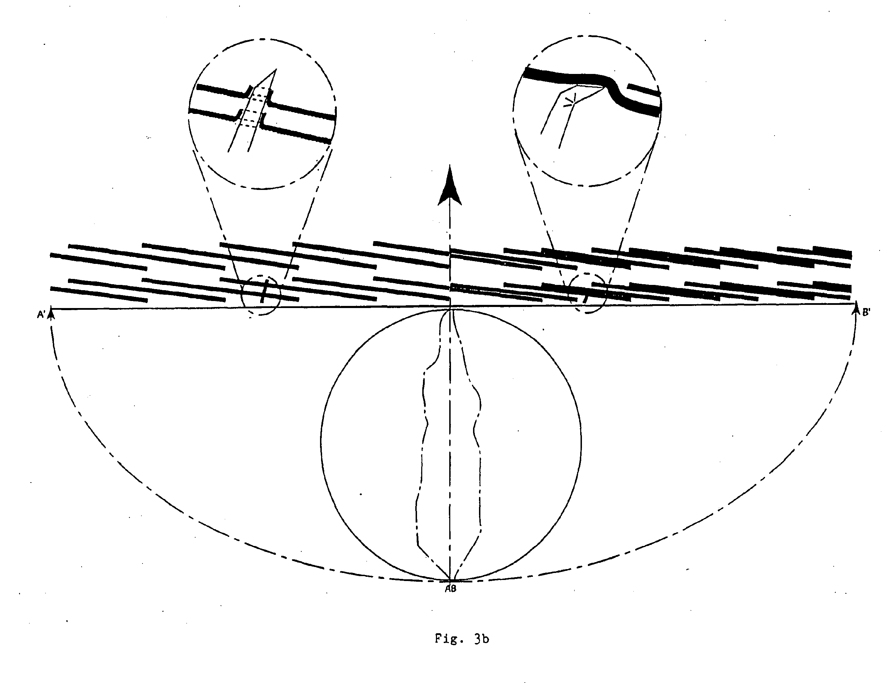

Figure 3b illustrates in the left hand half the puncture resistance potential of the thinner layers according to the arrangement shown in Figure 3a; and

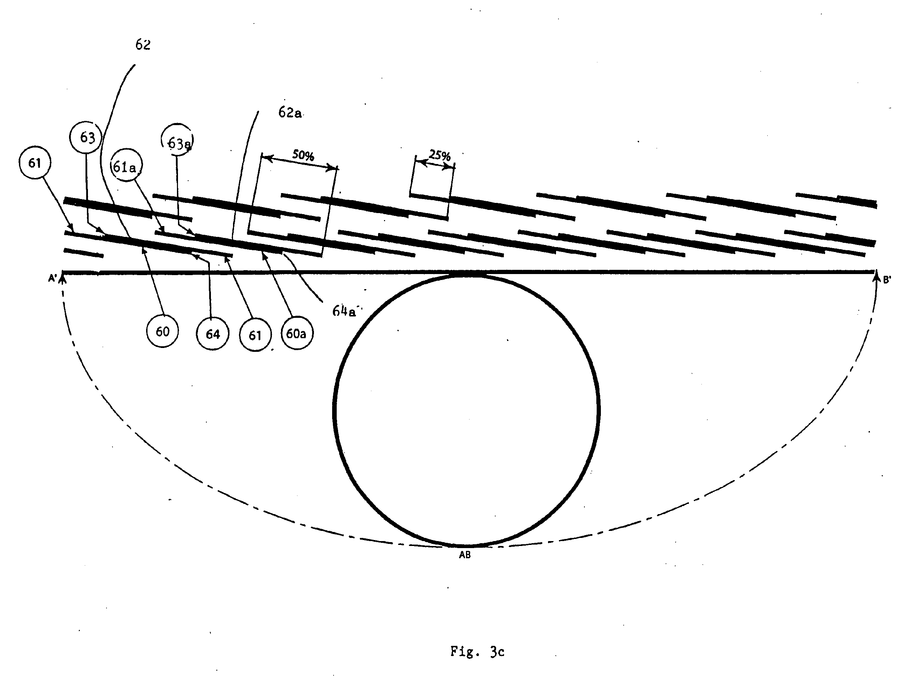

Figure 3c illustrates schematically a film winding wrapping pattern achievable with a method according to the invention.

Referring now to Figure 3a, and as referred to above, this shows length obtainable with maximum overlap, and minimum length for a 50% overlap, achievable with existing wrapping techniques. This is illustrated to provide background to the description of one preferred method according to the invention which will be described below with reference to Figure 3c. Figure 3a shows possible gas migration path between successive overlapping windings using film of uniform thickness.

Figure 3b illustrates in the left hand half the potential puncture pattern which may arise in practice in use of the wrapping pattern shown in Figure 3a (especially with thinner film).

In addition, Figure 3b illustrates, in the right hand half, the puncture resistance profile achievable by a method according to the invention, as described below with reference to Figure 3c.

Referring now to Figure 3c, this shows a novel wrapping pattern which can be obtained in according with a method according to the invention.

Each winding of film is designated generally by reference 60, and has at least one thin longitudinally extending edge strip portion 61. Actually, in the illustrated embodiment, each winding 60 has a pair of laterally spaced and longitudinally extending edge strip portions 61. However, minimum requirement is to provide a single edge strip portion 61, and subsequent description will follow on this basis.

The winding 60 also includes an adjoining thicker longitudinally extending portion 62, and which has a first side 63 adjoining the thinner left hand edge strip portion 61. The thicker portion 62 also has an opposed parallel second side 64.

In accordance with the method of the invention, each successive overlying winding, designated by way of example only by reference 60a, laterally overlaps its underlying winding 60 to such an extent that the respective first side 63a of the thicker portion 62a of each overlying winding 60a substantially follows the path of the respective second side 64 of the thicker portion 62 of the underlying winding 60.

The overlapping relationship between successive windings is shown by references 60 and 60a in Figure 3c only, and it will be evident from the drawing (Figure 3b, right hand side) that this wrapping pattern is repeated for successive layers of film windings.

The first covering set of layers of Figure 3c shows an arrangement with a 50% overlap between the overall lateral extent of each winding (according to a preferred embodiment of the invention), and a second set of layers with a 25% overlap (so as to reduce requirement for extra film).

To put it another way, each successive winding 60a laterally offsets its thicker portion 62a relative to the thicker portion 62 of the underlying winding 60 so as to give substantially complete and effectively uninterrupted coverage of the outer surface of the bale by the thicker portions 62, 62a etc. of the windings. To put it another way, when viewed from above the wrapped bale, the first side 63a of the thicker portion 62a of an overlying winding 60a is located substantially immediately above the second side 64 of the thicker portion 62 of the underlying winding 60. Therefore, adjacent overlapping thicker portions are located "side by side" when viewed from above the wrapped bale.

As indicated above, the provision of a single thin longitudinally extending edge portion 61 of each winding 60 is a minimum requirement, plus an adjoining thicker portion 62. However, it is preferred that two opposed thin edge portions 61 are provided, as illustrated in Figure 4c.

Any suitable means may be adopted in order to provide the thin/thick profile of each winding. In a first embodiment, film with the required variation in thickness is manufactured in a single forming process, having a thin longitudinal outer edge portion, and an adjoining thicker longitudinally extending portion. This film is wound onto a supply reel, and is then unwound and pre-stretched before being applied as successive windings to the bale.

In a second embodiment, a (regular) film is unwound from a reel, and the longitudinal edge portions are laterally stretched, so as to be reduced in thickness to substantially less than the thickness of the inner central portion (before being stretched in the longitudinal direction), and then applied to the bale.

In a third embodiment, the strip is obtained from two individual film reels of different widths, and joined to each other so as to form a strip with longitudinal outer edge portions having substantially less thickness.

In a fourth embodiment, the strip is obtained from two separate film reels which are spaced laterally from each other, so as to form a strip with longitudinal outer edge portions of substantially less thickness than the central inner portion.

Preferably, the film is stretched over a short distance between two stretch rollers, with different circumferential speeds, so as to prevent the film from over-stretching on weaker spots in the run length of the film between the film dispenser and the bale.

Preferably, the individual film strips (according to the third and fourth embodiments) are stretched individually, before laminating them, because, the stresses, causing the transverse reduction in the width of the film, may cause excess thickness reduction just beside the laminated part of the film, and sometimes even causing holes to be formed.

Further, the laminating of the film will prevent the film from tearing completely (between the stretcher unit and the bale) when one of the laminated strips is damaged; a tear in one of the films will not go further as the laminated part, since the other (non-torn) film portion will support the torn film.

When using a high stretch level or thinner films, preferably the laminated part should be half of the overall laminated film width, so as to be able to support the tom part sufficiently, especially in combination with film stretched at a higher stretch level.

Another advantage of the lamination width being half of the overall width of the laminated film is that, by changing the overlap from 50% to 25%, when having covered the bale fully after a half bale turn, the covering pattern can be changed from three (thin) layers to two (thin) layers pattern per half bale turn. Preferably, widths and thicknesses of the applied film, in combination with overlap of the successive strips should be chosen in such a manner that resulting coverage will have an even thickness over the bale surface, so as to make most effective use of the film.

As a maximum width of the film applied to the bale is determined by the diameter of the bale to be wrapped, the laminated film is effectively applying more film to the bale in one winding around the bale, and therefore the wrapping process is more efficient. Reverting now to the main advantages achieved by the invention, because the thicker inner portions of the winding are laid in a side by side relationship, i.e. "just connecting manner" the puncture resistance of the film is provided by the thicker inner portions. The overall width of the film strip (including the thinner outer portions) determines the length of the overlap. Because the outer portions are thinner, film material is saved, or in case extra layers are applied, the leakage through the overlap is reduced.

Further advantage is that, when applied to a round bale in a helical wrapping method, the thicker inner portion is absorbing relatively most of the application force, since it will be stretched on the inner portion the most. The thicker inner portion of the film is better able to absorb this force, which results in less risk of film tearing and/or puncturing the film. Therefore, relatively wider film strips as the typical 600 - 650mm (after pre-stretching) wide for a 120cm diameter bale can be applied to the bale. Tests have shown that film widths (after pre-stretching) up to ²/₃ of the bale diameter are possible.

Preferably, the inner portion (after pre-stretching) is one third or more of the diameter of the round bale to be wrapped, because the circular surface of the bale will reduce the application forces on the outer ends sufficiently. Tests have proved this to be the case.

Preferably, the longitudinal outer portions of the film strip are less than the actually used film thicknesses of 17 microns, preferably 10 microns. Preferably, the inner portion of the film is of equal or higher thickness compared with actual stretched film (17 microns).

Also, the inner portion width is preferably half of the total width of the film strip, so as to be able to apply an even 3 (single) layer pattern per half bale turn; or apply an even 2 (single layer).

Preferably also the film is pre-stretched, before being applied to the bale, at a higher stretch level than presently used, to improve the permeability of the film per (micron) thickness. When applying a stretch level of about 120% to a standard 25 micron film and laminating and winding according to a preferred method of the invention, a six layer pattern can be obtained with the same amount of film used in a traditional four layer method.

From tests it can be seen that due to the higher stretch level, film applied to the bale does show less wrinkles and therefore will have less gas exchange through the overlaps. Further, these tests show that the air trapped between the layers is less than when the bale is wrapped traditionally. Less trapped air between the layers will lead to a better connection between the layers, and therefore better airtightness. Also, this will give less problems when the bale is being grabbed with a clamping device for handling, since there will be reduced risk, or elimination of risk, of trapped air bursting the outer layers of film as the clamping device squeezes the bale.

It will be apparent to the man of ordinary skill in the art that the apparatus and techniques described with reference to Figures 3a, 3b and 3c, can be utilised to achieve at least some of the four preferred embodiments of method of the invention described above.

## Claims

1. A method of applying stretch film wrapping to an agricultural bale using a bale wrapper apparatus which comprises:
a bale-supporting table;
a dispenser reel arrangement from which stretch film wrapping can be withdrawn to form successive overlapping windings of film which cover the bale; and
means for applying relative rotation between the table and the dispenser reel arrangement during a wrapping cycle;
**characterised in that**:
each winding (60) of film comprises at least one thin longitudinally extending edge strip portion (61), and an adjoining thicker longitudinally extending portion (62);
the thicker portion (62) has a first side (63) adjoining said edge strip portion (61), and an opposed parallel second side (64); and
during at least an initial part of the wrapping cycle, each successive overlying winding (60a) laterally overlaps its underlying winding (60) to such an extent that the respective first side (63a) of the thicker portion (62a) of each overlying winding (60a) substantially follows the path of the respective second side (64) of the thicker portion (62) of the underlying winding (60).

2. A method according to claim 1, in which each successive overlying winding (60a) laterally overlaps its underlying winding (60) to such an extent that the respective first side (63a) of the thicker portion (62a) of each overlying winding (60a) substantially follows the path of the respective second side (64) of the thicker portion (62) of the underlying winding (60) during the entire wrapping cycle.

3. A method according to claim 1 or 2, **characterised in that** the width and thickness of the thin and the thick portions and the overlap of the successive windings is such that an even overall thickness of film is obtained over the surface of the bale.

4. A method according to any one of claims 1 to 3, **characterised in that** the width of the thick portion is 50% of the total width of the film applied to the bale.

5. A method according to claims 1 to 4, **characterised in that** the thick portion has two thin edge portions.

6. A method according to claims 1 to 5 **characterised in that** the film is already provided with a thick and thin portion before it is wound on a dispenser reel.

7. A method according to claims 1 to 5, **characterised in that** the thin portion is obtained by laterally stretching a portion of film having an originally uniform thickness.

8. A method according to claims 1 to 5, chartacterised in that the strip applied to the bale is laminated out of 2 strips of different widths.

9. A method according to claims 1 to 5, **characterised in that** the strip applied to the bale is laminated out of 2 strips of the same width but laterally spaced apart.

10. A method according to claims 1 to 9, **characterised in that** the film is stretched before application to the bale.

11. A method according to claim 10, **characterised in that** the stretching of the film is done between two rollers with relatively different circumferential speeds.

12. A method according to claim 8 or 9, **characterised in that** the stretching is done before the lamination of the individual strips.

13. A method according to claims 1 to 12, **characterised in that** the thin edge portion is less than 17 micron thick.

14. A method according to claim to claim 13, **characterised in that** the thin edge portion is about 10 micron in thickness.

15. A method according to claim 10, **characterised in that** the film is stretched by more than 90%.

16. A method according to claim 15, **characterised in that** film is stretched by 120% or more.

17. A method according to claims 1 to 16, **characterised in that** the width of the thick portion is ¹/₃ of the bale diameter.

18. A method according to claims 1 to 17, **characterised in that** the total width of the strip when applied to the bale is between half and ²/₃ of the bale diameter.

19. Apparatus for applying stretch film wrapping to an agricultural bale, comprising:
a bale-supporting table;
a dispenser reel arrangement from which stretch film wrapping can be withdrawn to form successive overlapping windings of film which cover the bale; and
means for applying relative rotation between the table and the dispenser reel arrangement during a wrapping cycle;
**characterised in that**:
each winding (60) of film comprises at least one thin longitudinally extending edge strip portion (61), and an adjoining thicker longitudinally extending portion (62), and
the thicker portion (62) has a first side (63) adjoining said edge strip portion (61), and an opposed parallel second side (64); and
the apparatus being constructed and arranged such that, during at least an initial part of the wrapping cycle, each successive overlying winding (60a) laterally overlaps its underlying winding (60) to such an extent that the respective first side (63 a) of the thicker portion (62a) of each overlying winding (60a) substantially follows the path of the respective second side (64) of the thicker portion (62) of the underlying winding (60).

20. Apparatus according to claim 19 for carrying out a method according to any one of claims 1 to 18.

## Patentansprüche

1. Verfahren zum Aufbringen einer Stretchfolienverpackung an einem landwirtschaftlichen Ballen mit einer Ballenabwickelvorrichtung, die Folgendes umfasst:
einen Ballenauflagetisch,
eine Ausgaberollenanordnung, von der Stretchfolienverpackung abgezogen werden kann, um aufeinanderfolgende überlappende Folienwicklungen zu bilden, die den Ballen bedecken, und
eine Einrichtung zum Anwenden relativer Drehung zwischen dem Tisch und der Ausgaberollenanordnung während eines Umwicklungszyklus,
**dadurch gekennzeichnet, dass**:
jede Folienwicklung (60) wenigstens einen dünnen, längs verlaufenden Randstreifenabschnitt (61) und einen angrenzenden dickeren längs verlaufenden Abschnitt (62) aufweist,
der dickere Abschnitt (62) eine erste Seite (63), die an den genannten Randstreifenabschnitt (61) angrenzt, und eine entgegengesetzte parallele zweite Seite (64) hat und
während wenigstens eines anfänglichen Teils des Umwicklungszyklus jede nachfolgende überlagernde Wicklung (60a) ihre darunter liegende Wicklung (60) seitlich in einem solchen Ausmaß überlappt, dass die jeweilige erste Seite (63a) des dickeren Abschnitts (62a) jeder überlagernden Wicklung (60a) im Wesentlichen dem Weg der jeweiligen zweiten Seite (64) des dickeren Abschnitts (62) der darunter liegenden Wicklung (60) folgt.

2. Verfahren nach Anspruch 1, bei dem jede nachfolgende überlagernde Wicklung (60a) ihre darunter liegende Wicklung (60) seitlich in einem solchen Ausmaß überlappt, dass die jeweilige erste Seite (63a) des dickeren Abschnitts (62a) jeder überlagernden Wicklung (60a) während des gesamten Umwicklungszyklus im Wesentlichen dem Weg der jeweiligen zweiten Seite (64) des dickeren Abschnitts (62) der darunter liegenden Wicklung (60) folgt.

3. Verfahren nach Anspruch 1 oder 2, **dadurch gekennzeichnet, dass** die Breite und Dicke des dünnen und des dicken Abschnitts und die Überlappung der aufeinanderfolgenden Wicklungen so sind, dass über die Oberfläche des Ballens eine gleichmäßige Gesamtfoliendicke erreicht wird.

4. Verfahren nach einem der Ansprüche 1 bis 3, **dadurch gekennzeichnet, dass** die Breite des dicken Abschnitts 50 % der Gesamtbreite der an dem Ballen aufgebrachten Folie beträgt.

5. Verfahren nach einem der Ansprüche 1 bis 4, **dadurch gekennzeichnet, dass** der dicke Abschnitt zwei dünne Randabschnitte hat.

6. Verfahren nach einem der Ansprüche 1 bis 5, **dadurch gekennzeichnet, dass** die Folie bereits mit einem dünnen und einem dicken Abschnitt versehen ist, bevor sie auf eine Ausgaberolle gewickelt wird.

7. Verfahren nach einem der Ansprüche 1 bis 5, **dadurch gekennzeichnet, dass** der dünne Teil durch seitliches Dehnen eines Folienabschnitts, der eine ursprüngliche einheitliche Dicke hat, erreicht wird.

8. Verfahren nach einem der Ansprüche 1 bis 5, **dadurch gekennzeichnet, dass** der an dem Ballen aufgebrachte Streifen aus zwei Streifen unterschiedlicher Breite laminiert wird,

9. Verfahren nach einem der Ansprüche 1 bis 5, **dadurch gekennzeichnet, dass** der an dem Ballen aufgebrachte Streifen aus zwei Streifen der gleichen Breite, die aber seitlich voneinander beabstandet sind, laminiert wird.

10. Verfahren nach einem der Ansprüche 1 bis 9, **dadurch gekennzeichnet, dass** die Folie vor der Aufbringung an dem Ballen gedehnt wird.

11. Verfahren nach Anspruch 10, **dadurch gekennzeichnet, dass** das Dehnen der Folie zwischen zwei Rollen mit relativ verschiedenen Umfangsgeschwindigkeiten durchgeführt wird.

12. Verfahren nach Anspruch 8 oder 9, **dadurch gekennzeichnet, dass** das Dehnen durchgeführt wird, bevor die einzelnen Streifen laminiert werden.

13. Verfahren nach einem der Ansprüche 1 bis 12, **dadurch gekennzeichnet, dass** der dünne Randabschnitt weniger als 17 Mikrometer dick ist.

14. Verfahren nach Anspruch 13, **dadurch gekennzeichnet, dass** der dünne Randabschnitt eine Dicke von etwa 10 Mikrometern hat.

15. Verfahren nach Anspruch 10, **dadurch gekennzeichnet, dass** die Folie um mehr als 90 % gedehnt wird.

16. Verfahren nach Anspruch 15, **dadurch gekennzeichnet, dass** die Folie um 120 % oder mehr gedehnt wird.

17. Verfahren nach einem der Ansprüche 1 bis 16, **dadurch gekennzeichnet, dass** die Breite des dicken Abschnitts ⅓ des Ballendurchmessers beträgt.

18. Verfahren nach einem der Ansprüche 1 bis 17, **dadurch gekennzeichnet, dass** die Gesamtbreite des Streifens, wenn er am Ballen aufgebracht wird, zwischen der Hälfte und ²/₃ des Ballendurchmessers beträgt.

19. Vorrichtung zum Aufbringen von Stretchfolienverpackung an einem landwirtschaftlichen Ballen, die Folgendes umfasst:
einen Ballenauflagetisch,
eine Ausgaberollenanordnung, von der Stretchfolienverpackung abgezogen werden kann, um aufeinanderfolgende überlappende Folienwicklungen zu bilden, die den Ballen bedecken, und
eine Einrichtung zum Anwenden relativer Drehung zwischen dem Tisch und der Ausgaberollenanordnung während eines Umwicklungszyklus,
**dadurch gekennzeichnet, dass**:
jede Folienwicklung (60) wenigstens einen dünnen, längs verlaufenden Randstreifenabschnitt (61) und einen angrenzenden dickeren längs verlaufenden Abschnitt (62) aufweist,
der dickere Abschnitt (62) eine erste Seite (63), die an den genannten Randstreifenabschnitt (61) angrenzt, und eine entgegengesetzte parallele zweite Seite (64) hat und
die Vorrichtung so gebaut und angeordnet ist, dass während wenigstens eines anfänglichen Teils des Umwicklungszyklus jede nachfolgende überlagernde Wicklung (60a) ihre darunter liegende Wicklung (60) seitlich in einem solchen Ausmaß überlappt, dass die jeweilige erste Seite (63a) des dickeren Abschnitts (62a) jeder überlagernden Wicklung (60a) im Wesentlichen dem Weg der jeweiligen zweiten Seite (64) des dickeren Abschnitts (62) der darunter liegenden Wicklung (60) folgt.

20. Vorrichtung nach Anspruch 19 zum Durchführen eines Verfahrens nach einem der Ansprüche 1 bis 18.

## Revendications

1. Procédé pour appliquer un emballage avec film étirable à une balle agricole utilisant un appareil d'emballage de balles qui comprend :
une table de support de balle ;
un agencement de bobine distributrice à partir duquel un emballage avec film étirable peut être retiré pour former des enroulements à chevauchement successifs de film qui recouvrent la balle ; et
des moyens pour appliquer une rotation relative entre la table et l'agencement de bobine distributrice pendant un cycle d'emballage ;
**caractérisé en ce que** :
chaque enroulement (60) de film comprend au moins une mince partie de bande de bord s'étirant longitudinalement (61), et une partie attenante plus épaisse s'étirant longitudinalement (62) ;
la partie plus épaisse (62) a un premier côté (63) attenant à ladite partie de bande de bord (61), et un second côté parallèle opposé (64) ; et
pendant au moins une partie initiale du cycle d'emballage, chaque enroulement sus-jacent successif (60a) chevauche latéralement son enroulement sous-jacent (60) à tel point que le premier côté respectif (63a) de la partie plus épaisse (62a) de chaque enroulement sus-jacent (60a) suit substantiellement la trajectoire du second côté respectif (64) de la partie plus épaisse (62) de l'enroulement sous-jacent (60).

2. Procédé selon la revendication 1, dans lequel chaque enroulement sus-jacent successif (60a) chevauche latéralement son enroulement sous-jacent (60) à tel point que le premier côté respectif (63a) de la partie plus épaisse (62a) de chaque enroulement sus-jacent (60a) suit substantiellement la trajectoire du second côté respectif (64) de la partie plus épaisse (62) de l'enroulement sous-jacent (60) pendant tout le cycle d'emballage.

3. Procédé selon la revendication 1 ou 2, **caractérisé en ce que** la largeur et l'épaisseur des parties mince et épaisse et le chevauchement des enroulements successifs sont tels qu'une épaisseur globale régulière de film est obtenue sur la surface de la balle.

4. Procédé selon une quelconque des revendications 1 à 3, **caractérisé en ce que** la largeur de la partie épaisse représente 50 % de la largeur totale du film appliqué à la balle.

5. Procédé selon les revendications 1 à 4, **caractérisé en ce que** la partie épaisse a deux parties de bord minces.

6. Procédé selon les revendications 1 à 5 **caractérisé en ce que** le film est déjà pourvu d'une partie épaisse et mince avant qu'il ne soit enroulé sur une bobine distributrice.

7. Procédé selon les revendications 1 à 5, **caractérisé en ce que** la partie mince est obtenue en étirant latéralement une partie de film ayant une épaisseur uniforme à l'origine.

8. Procédé selon les revendications 1 à 5, **caractérisé en ce que** la bande appliquée à la balle est laminée à partir de 2 bandes de différentes largeurs.

9. Procédé selon les revendications 1 à 5, **caractérisé en ce que** la bande appliquée à la balle est laminée à partir de 2 bandes de la même largeur mais espacées latéralement.

10. Procédé selon les revendications 1 à 9, **caractérisé en ce que** le film est étiré avant l'application à la balle.

11. Procédé selon la revendication 10, **caractérisé en ce que** l'étirement du film est effectué entre deux rouleaux avec des vitesses circonférentielles relativement différentes.

12. Procédé selon la revendication 8 ou 9, **caractérisé en ce que** l'étirement est effectué avant le laminage des bandes individuelles.

13. Procédé selon les revendications 1 à 12, **caractérisé en ce que** la partie de bord mince est épaisse de moins de 17 microns.

14. Procédé selon la revendication 13, **caractérisé en ce que** la partie de bord mince est d'une épaisseur d'environ 10 microns.

15. Procédé selon la revendication 10, **caractérisé en ce que** le film est étiré à plus de 90 %.

16. Procédé selon la revendication 15, **caractérisé en ce que** le film est étiré à 120 % ou plus.

17. Procédé selon les revendications 1 à 16, **caractérisé en ce que** la largeur de la partie épaisse représente ⅓ du diamètre de la balle.

18. Procédé selon les revendications 1 à 17, **caractérisé en ce que** la largeur totale de la bande lorsqu'elle est appliquée à la balle représente entre la moitié et ²/₃ du diamètre de la balle.

19. Appareil pour appliquer un emballage avec film étirable à une balle agricole, comprenant :
une table de support de balle ;
un agencement de bobine distributrice à partir duquel un emballage avec film étirable peut être retiré pour former des enroulements à chevauchement successifs de film qui recouvrent la balle ; et
des moyens pour appliquer une rotation relative entre la table et l'agencement de bobine distributrice pendant un cycle d'emballage ;
**caractérisé en ce que** :
chaque enroulement (60) de film comprend au moins une mince partie de bande de bord s'étirant longitudinalement (61), et une partie attenante plus épaisse s'étirant longitudinalement (62), et
la partie plus épaisse (62) a un premier côté (63) attenant à ladite partie de bande de bord (61), et un second côté parallèle opposé (64) ; et
l'appareil étant construit et agencé de telle sorte que, pendant au moins une partie initiale du cycle d'emballage, chaque enroulement sus-jacent successif (60a) chevauche latéralement son enroulement sous-jacent (60) à tel point que le premier côté respectif (63a) de la partie plus épaisse (62a) de chaque enroulement sus-jacent (60a) suit substantiellement la trajectoire du second côté respectif (64) de la partie plus épaisse (62) de l'enroulement sous-jacent (60).

20. Appareil selon la revendication 19 pour exécuter un procédé selon une quelconque des revendications 1 à 18.
